(19) Europäisches Patentamt
European Patent Office
Office européen des brevets

(11) **EP 3 371 577 B1**

(12) **EUROPÄISCHE PATENTSCHRIFT**

(45) Veröffentlichungstag und Bekanntmachung des Hinweises auf die Patenterteilung:
**08.10.2025 Patentblatt 2025/41**

(21) Anmeldenummer: **16784495.0**

(22) Anmeldetag: **20.10.2016**

(51) Internationale Patentklassifikation (IPC):
*G01N 21/84* (2006.01)    *G01N 21/88* (2006.01)
*G01N 21/89* (2006.01)    *G01N 21/91* (2006.01)

(52) Gemeinsame Patentklassifikation (CPC):
**G01N 21/8851; G01N 21/8422; G01N 21/8903; G01N 21/91;** G01N 2021/8883

(86) Internationale Anmeldenummer:
**PCT/EP2016/075219**

(87) Internationale Veröffentlichungsnummer:
**WO 2017/076655 (11.05.2017 Gazette 2017/19)**

(54) **ANORDNUNG ZUR BESTIMMUNG DER OBERFLÄCHENBESCHAFFENHEIT VON BAUTEILOBERFLÄCHEN**

ARRANGEMENT FOR DETERMINING THE SURFACE QUALITY OF COMPONENT SURFACES

ENSEMBLE POUR LA DÉTERMINATION DE L'ÉTAT DE SURFACE DE SURFACES D'ÉLÉMENTS STRUCTURAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.11.2015 DE 102015221697**

(43) Veröffentlichungstag der Anmeldung:
**12.09.2018 Patentblatt 2018/37**

(73) Patentinhaber: **Fraunhofer-Gesellschaft zur Förderung der angewandten Forschung e.V. 80686 München (DE)**

(72) Erfinder:
• **WOLLMANN, Philipp**
  **01189 Dresden (DE)**
• **GRÄHLERT, Wulf**
  **01277 Dresden (DE)**
• **GRUBER, Florian**
  **01127 Dresden (DE)**

(74) Vertreter: **Pfenning, Meinig & Partner mbB Patent- und Rechtsanwälte An der Frauenkirche 20 01067 Dresden (DE)**

(56) Entgegenhaltungen:
EP-A1- 3 112 849        WO-A1-2013/035726
WO-A1-2015/133287    JP-A- 2008 180 618

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Anordnung zur Bestimmung der Oberflächenbeschaffenheit von Bauteiloberflächen, insbesondere von Defekten, ganz besonders von Rissen.

Bisher ist es bekannt, eine Eindringprüfung nach DIN EN 4179 und NAS 410 durchzuführen, dabei wird ein so genanntes Fluoreszenz-Rissprüföl eingesetzt. Mit diesem wird die Oberfläche benetzt und anschließend teilweise durch eine Reinigung mit einer Flüssigkeit entfernt. Bestandteile eines Stoffes, die bei Bestrahlung mit elektromagnetischer Strahlung mindestens einer Wellenlänge zur Fluoreszenz angeregt werden können, verbleiben dabei in Bereichen, in denen Vertiefungen, insbesondere Risse vorhanden sind. Wird die Oberfläche mit zur Fluoreszenzanregung geeigneter elektromagnetischer Strahlung bestrahlt, wird eine visuelle Erkennbarkeit erreicht, die vom Prüfpersonal ausgenutzt werden kann, dabei kann es zu subjektiven Fehlern durch das Prüfpersonal kommen.

Als weiteres Prüfverfahren haben sich solche etabliert, bei denen Schallwellen mit einem Wandler in eine Oberfläche eines Bauteils eingekoppelt und im Bauteil reflektierte Schallwellen detektiert werden. Dabei ist ein hoher apparatetechnischer Aufwand erforderlich und es können nur Oberflächen genutzt werden, die eine ausreichende Größe für das Aufsetzen des Wandlers aufweisen. Außerdem ist ein entsprechend großer Zeitaufwand erforderlich.

Bei der Prüfung mit Röntgenstrahlung ist der hohe Aufwand nachteilig und es müssen Anforderungen des Strahlungsschutzes erfüllt werden.

So sind aus JP 2008 180618 A Möglichkeiten für die optische Detektion von Oberflächendefekten offenbart.

WO 2015/133287 A1 betrifft eine Vorrichtung, ein Verfahren sowie ein Programm zur Einordnung von Oberflächentexturen.

Eine Vorrichtung und ein Verfahren zur Bestimmung der Dicken von Schichten auf Oberflächen sind in WO 2013/035726 A1 beschrieben.

Es ist daher Aufgabe der Erfindung, Möglichkeiten für die zerstörungsfreie Bestimmung der Oberflächenbeschaffenheit an Bauteiloberflächen anzugeben, die in deutlich verkürzter Zeit zu Ergebnissen mit ausreichender Genauigkeit führen und somit sogar für eine inline Messung in Fertigungsprozessen einsetzbar sind.

Erfindungsgemäß wird diese Aufgabe mit einer Anordnung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Die erfindungsgemäße Anordnung zur Bestimmung der Oberflächenbeschaffenheit von Bauteilen weist mehrere Detektoren auf, die zur ortsaufgelösten spektralen Analyse elektromagnetischer Strahlung innerhalb eines Wellenlängenintervalls ausgebildet sind. Diese Detektoren sind dazu in einer Reihen- oder einer Reihen- und Spaltenanordnung angeordnet. Die Detektoren sind mit einer elektronischen Auswerteeinheit verbunden und so angeordnet, dass von einer breitbandigen Strahlungsquelle emittierte elektromagnetische Strahlung entweder nach einer Reflexion an der Oberfläche eines Bauteils, einer auf der Oberfläche eines Bauteils ausgebildeten Schicht und/oder nach dem Durchstrahlen eines für die elektromagnetische Strahlung transparenten Bauteils auf die Detektoren auftrifft. Dabei erfolgt die Bestrahlung so, dass auf einer Fläche, von der die elektromagnetische Strahlung reflektiert oder durch die Fläche transmittiert wird, eine homogene Intensität der elektromagnetischen Strahlung eingehalten ist. Die jeweils gleichzeitig zu detektierende Fläche soll also mit homogener Intensität bestrahlt werden. Bei der breitbandigen Bestrahlung werden elektromagnetische Wellen, die innerhalb eines Wellenlängenintervalls liegen, auf die jeweilige Bauteiloberfläche gerichtet, die untersucht werden soll.

Die elektronische Auswerteeinheit ist so ausgebildet, dass die durch die Detektoren orts- und wellenlängenaufgelöst erfassten Messsignale innerhalb eines Wellenlängenintervalls einem bestimmten Wellenlängenbereich sowie innerhalb eines vorgebbaren Teilbereiches der bestrahlten Oberfläche einem einzelnen Ortspunkt jeweils zuordenbar sind.

Erfindungsgemäß wird mittels der elektronischen Auswerteeinheit mit den für einzelne Ortspunkte erfassten Messsignalen eine mehrdimensionale Abbildung der jeweiligen bestrahlten Fläche erstellt. Diese Abbildung kann beispielsweise auf einem Display angezeigt werden. Mittels einer Intensitätsanalyse kann dann eine Auswertung auf das Vorhandensein von Defekten durchgeführt werden. Damit besteht die Möglichkeit eine vom Prüfpersonal unabhängige Auswertung zu erreichen. Es ist sogar eine Quantifizierung von Defekten und/oder eine objektive Gütebestimmung der jeweiligen Oberflächenbeschaffenheit möglich.

Außerdem wird mit der Gesamtheit aller an Ortspunkten der jeweiligen bestrahlten Fläche wellenlängenaufgelöst erfassten Intensitäten eine dreidimensionale Datenstruktur, bestehend aus einer wellenlängenaufgelösten und zwei ortsaufgelösten Dimensionen, ab (Hypercube) gebildet.

Danach kann für alle wellenlängenaufgelöst erfassten Messsignale des Teilbereiches eine Datenreduzierung durchgeführt werden, bei der aussagekräftige Merkmale selektiert werden und der daraus resultierende Merkmalssatz unter Verwendung eines in einem elektronischen Speicher abgelegten Regressionsmodells, das anhand von Merkmalssätzen ermittelt wurde, die vorher an Proben ermittelt worden sind, deren Oberflächenbeschaffenheiten mit einem anderen Messverfahren, das bevorzugt eine höhere Messgenauigkeit aufweist, ermittelt wurden, einem Regressionsverfahren unterzogen wird, wodurch eine Aussage über die Oberflächenbeschaffenheit des betreffenden Teilbereiches der bestrahlten Oberfläche ableitbar ist, wobei mindestens ein Teilbereich zur Bewertung der Oberflächenbeschaffenheit herangezogen wird.

Eine mit der Erfindung untersuchte Oberflächenbeschaffenheit von Bauteilen sollte zur gleichen Klasse von Oberflächenbeschaffenheiten, die einen vergleichbaren Aufbau oder Zusammensetzung aufweisen sollte, wie die vorab mit einem anderen Messverfahren untersucht worden sind, gehören.

Der funktionale Zusammenhang zwischen adäquat selektierten Merkmalssätzen von Oberflächenbeschaffenheiten, die mit einem anderen Messverfahren ermittelt wurden, kann beispielsweise mittels linearer oder nicht-linearer Regression, einem Partial-Least-Square-Algorithmus (PLS), einem neuronalen Netzwerk, einer Kombination von mindestens zwei dieser Verfahren oder anderen Regressionsverfahren (Regressionsmodell) bestimmt werden.

In dem elektronischen Speicher sollte also das Regressionsmodell, das anhand der mit der erfindungsgemäßen Anordnung erfassten Datensätze von Proben, die der Datenreduktion und Merkmalsextraktion unterzogen wurden und deren - mit einem anderen Messverfahren ermittelten - Oberflächenbeschaffenheiten, erstellt wurde, enthalten sein. Anhand eines im elektronischen Speicher gespeicherten Regressionsmodells, kann aus den mit der erfindungsgemäßen Anordnung ermittelten Datensätzen die Oberflächenbeschaffenheit einer vergleichbar untersuchten Probe der gleichen Probenklasse mit vergleichbarem Aufbau bestimmt werden.

Die elektronische Auswerteeinheit nimmt die Datenreduzierung und Merkmalsextraktion der mit der erfindungsgemäßen Anordnung ermittelten Datensätze vor. Dabei kann zunächst eine Auswertung der spektralen Informationen und anschließend der Ortsinformationen erfolgen. Möglich ist auch eine dazu umgekehrte Reihenfolge oder eine beliebige Kombination von mehr als zwei einzelnen Schritten zur Datenreduzierung und Merkmalsextraktion.

Die Datenreduzierung und Merkmalsextraktion kann mittels Hauptkomponentenanalyse (PCA), Parametrisierung von Texturinformationen, Bestimmung statistischer Parameter, beispielsweise eine Mittelwertbildung und/oder Bestimmung der Standardabweichung, und Kombinationen davon erfolgen.

Im Falle der Verwendung der Hauptkomponentenanalyse werden die n Intensitäten der Wellenlängen (Spektren) aller Ortspunkte durch eine Koordinatentransformation in ein neues orthogonales Koordinatensystem - dem Hauptkomponentenraum - überführt, in dem die ursprünglichen Daten maximale Varianz besitzen, und wobei n die Anzahl der gemessenen Wellenlängen repräsentiert.

Die Koordinatentransformation errechnet sich durch die Bestimmung der n Eigenvektoren (Hauptkomponenten) und der dazugehörigen n Eigenwerte der Covarianzmatrix des Datensatzes der gemessenen Teilfläche. Je größer der n-te Eigenwert ist, umso mehr beschreibt die entsprechende n-te Hauptkomponente die ursprünglich Varianz, d.h. der Eigenvektor mit dem größten Eigenwert ist die 1. Hauptkomponente des Datensatzes und beschreibt den Großteil der ursprünglichen Varianz des Datensatzes. Der Eigenvektor mit dem niedrigsten Eigenwert ist die n-te Hauptkomponente des Datensatzes und beschreibt keine relevanten Eigenschaften des Datensatzes. Es wird nur eine bestimmte Anzahl Hauptkomponenten berücksichtigt- oft die ersten drei bis sechs, die bereits eine hinreichende Beschreibung - beispielsweise > 95 % - der ursprünglichen Varianz des Datensatzes gewährleisten. Die Anzahl der zu berücksichtigenden Hauptkomponenten - und somit die Dimensionalität des Hauptkomponentenraumes - kann Kriterien-gestützt beispielsweise anhand des Anteils an der Gesamtvarianz oder eines Scree-Tests gewählt werden.

Die Koordinaten der Spektren im neu aufgespannten Hauptkomponentenraum sind die sogenannten Score-Werte (Punktzahl), welche hinreichend den entsprechenden Ortspunkt charakterisieren.

Mit der elektronischen Auswerteeinheit kann vorteilhaft die Datenreduktion und Merkmalsextraktion so erfolgen, dass die erfindungsgemäß erfassten Daten auf gleichem Wege wie die Daten der Proben, anhand derer bekannten Oberflächenbeschaffenheiten das Regressionsmodell erstellt wurde, ausgewertet werden. Anhand des erfindungsgemäß erfassten Datensatzes, der orts- und wellenlängenaufgelöst erfassten Intensitäten der elektromagnetischen Strahlung, wird anschließend unter Verwendung des Regressionsmodells die Oberflächenbeschaffenheit der Bauteiloberfläche bestimmt.

Bei der Auswertung der erfindungsgemäß erfassten Daten kann bevorzugt wie folgt vorgegangen werden:

Variante a) Mit einer Hauptkomponentenanalyse der spektralen Informationen aller Ortspunkte der Teilfläche werden bevorzugt die ersten sechs Hauptkomponenten einschließlich der Score-Werte ermittelt. Da die erfindungsgemäß erfassten Daten alle Ortspunkte einer untersuchten Fläche repräsentieren, kann die flächige Verteilung der Scorewerte pro Hauptkomponente angegeben werden. Die Quantifizierung der unterschiedlichen flächigen Verteilung der Scorewerte erfolgt dabei durch verschiedene statistische Parameter, die anhand aller Scorewerte einer Hauptkomponente der jeweiligen Teilfläche bestimmt werden. Insbesondere sind dies die Varianz, der Interquantilabstand oder die mittlere absolute Abweichung. Dieses Vorgehen kann für alle Hauptkomponenten angewendet werden. Die Bestimmung der Oberflächenbeschaffenheit erfolgt durch die elektronische Auswerteeinheit auf Grundlage eines Regressionsmodells, wie z.B. ein Partial-Least-Square Regressionsmodell (PLS), wobei die Parameter ggf. einer weiteren vorherigen Merkmalsextraktion, bevorzugt über eine weitere Hauptkomponentenanalyse (PCA)- unterworfen wurden.

Das dabei verwendete Regressionsmodell (hier PLS) wurde vorher anhand von Proben der gleichen Probenklasse mit vergleichbarem Aufbau, deren Oberflächenbeschaffenheiten mit einem anderen Messverfahren bestimmt wurden, ermittelt, wobei alle Schritte der Merkmalsextraktion analog dem oben beschriebenen Verfahren durchgeführt wurden.

Variante b) Über eine Hauptkomponentenanalyse der spektralen Information aller erfassten Ortspunkte der jeweiligen untersuchten Teilfläche wird eine oder mehrere Hauptkomponenten, insbesondere die Score-Werte der Ortspunkte pro Hauptkomponente berechnet, die über die Probe flächig verteilt angegeben werden können. Die Ortspunkte können dabei durch verschiedene Parameter der Scorewerte beschrieben werden, neben dem eigentlichen Wert auch insbesondere durch die dreifache Standardabweichung vom Mittelwert aller Scorewerte der jeweiligen Teilfläche. Weicht an einem Ortspunkt dieser Parameter um einen bestimmten Schwellwert vom Mittelwert dieses Parameters aller Ortspunkte ab, wird er als Defekt klassifiziert. Liegt ein solcher Ortspunkt neben einem bereits als defekt klassifizierten Ortspunkt, können auf diese Weise Gruppen von als defekt klassifizierten Ortspunkten (Defektbereiche) bestimmt werden. Für die weitere Merkmalsextraktion und somit zur Bestimmung des Merkmals "Oberflächenbeschaffenheit" werden die Defektbereiche in verschiedene Gruppen aufgeteilt, wobei die Gruppeneinteilung der erfindungsgemäß bestimmten Defektbereiche durch Bestimmung von Parametern erfolgen kann, die eine räumliche Information des Defektbereiches erbringen, insbesondere der Fläche, Ausdehnung in Richtung beider Ortskoordinaten, Mittelpunkt, Exzentrizität, Äquivalenz-Durchmesser, Umfangslänge, Ausfüllung der umhüllenden Polygonfläche, Verhältnis der Fläche zur umhüllenden konvexen Fläche. Mittels eines weiteren Klassifizierungsverfahrens, vorteilhaft einer Clusteranalyse können, die die Defekte beschreibenden Parametersätze in bestimmte Defekttypen eingeteilt werden, wobei sich eine Einteilung in vier Defekttypen als vorteilhaft erwiesen hat. Soll eine Zuordnung zu bestimmten, vorab ermittelten Defekttypen erfolgen, ist die Verwendung eines überwachten Klassifizierungsverfahrens, z.B. einer Stützvektormethode oder Diskriminanzanalyse vorteilhaft. Aus der Anzahl der Defekte pro Defekttyp, die an der untersuchten Fläche ermittelt werden, kann anhand eines Regressionsmodells, insbesondere eines linearen Regressionsmodells, die Oberflächenbeschaffenheit der Teilfläche ermittelt werden. Das dabei verwendete Regressionsmodell wurde vorher anhand von Proben der gleichen Probenklasse mit vergleichbarem Aufbau, deren Oberflächenbeschaffenheiten mit einem anderen Messverfahren bestimmt wurden, ermittelt, wobei alle Schritte der Merkmalsextraktion analog dem oben beschriebenen Verfahren durchgeführt wurden.

Die untersuchten Größen der Teilbereiche können je nach untersuchter Bauteiloberfläche angepasst werden und sind von Mikrometern bis Metern einstellbar, ebenso ist die Ortsauflösung variierbar.

In einer Reihe sollten dabei mindestens 30, bevorzugt mindestens 100 Detektoren angeordnet sein.

In einer Spalte sollten mindestens eine, bevorzugt mindestens 50 Detektoren angeordnet sein.

Eine erfindungsgemäße Anordnung kann eine Hyperspektral-Kamera mit geeigneten strahlungsformenden optischen Elementen und einer elektronischen Auswerteelektronik eingesetzt werden.

Die Bestrahlung der Fläche sollte mit mindestens einem Winkel im Bereich 0° bis < 90° in Bezug zur Normalen der Oberfläche auf die die elektromagnetische Strahlung auftrifft erfolgen. Bei einer Durchstrahlung mindestens eines für die elektromagnetische Strahlung transparenten Bauteils sollte vorteilhaft der Winkel von zumindest nahezu 0° zur Probennormalen eingehalten sein, also die Strahlung möglichst senkrecht auf diese Oberfläche gerichtet werden, um den reflektierten Anteil so klein als möglich zu halten. Die Bestrahlung und Detektion kann auch bei veränderlichem Einfallswinkel der elektromagnetischen Strahlung durchgeführt werden. Wie bereits zum Ausdruck gebracht, können dabei Einfallswinkel im Bereich 0° bis maximal 89° gewählt werden. Die Detektion kann sich auch auf linear polarisierte elektromagnetische Strahlung beschränken. In diesem Fall kann eine vorteilhafte Ausrichtung einer oder mehrerer Polarisationsebene(n) vor oder/und nach der bestrahlten Oberfläche gewählt werden.

Insbesondere bei Verwendung von Detektoren, die lediglich eine Linie simultan spektral und ortsaufgelöst messen können, können die Detektoren und die Bauteiloberflächen entlang mindestens einer Achse relativ und dabei bevorzugt in einem vorteilhaften Abstand zueinander bewegt werden. So kann bei statisch fixierten Detektoren und Strahlungsquelle eine Bauteiloberfläche entlang einer Achse bewegt werden. Dies kann mit einem entsprechend beweglichen Tisch, auf dem eine solche Probe angeordnet ist, die in eine x- und ggf. auch in eine y-Richtung bewegt werden kann, erreicht werden. Es ist aber auch die Abwicklung von Rolle zu Rolle möglich, wenn die jeweilige Probe mit einem oder mehreren flexibel verformbaren Werkstoff(en) gebildet ist, und dabei beispielsweise in Form einer Folie vorliegt.

An der Strahlungsquelle können die elektromagnetische Strahlung formende Elemente vorhanden sein. In einer einfachen Ausführung kann die Strahlungsquelle mit einem Mikroskop kombiniert sein. Es kann aber auch eine Strahlungsquelle in einem Hohlkörper angeordnet sein, aus dem die elektromagnetische Strahlung diffus austritt und auf die zu bestrahlende Fläche gerichtet werden kann. Der Hohlkörper kann eine Kugel oder Zylinder sein. Es sollte eine gleichzeitig zu detektierende Fläche homogen bestrahlt werden können. Bei einer Strahlungsquelle mit strahlformenden optischen Elementen sollten bei der Auswahl der jeweils eingesetzten optischen Elemente, die zur Strahlformung dienen, der genutzte Wellenlängenbereich berücksichtigt werden.

Bevorzugt kann im Strahlengang der elektromagnetischen Strahlung eine den Einfall von gestreuter elektromagnetischer Strahlung vermeidende Blende vor den Detektoren angeordnet sein.

Von der Strahlungsquelle kann elektromagnetische Strahlung emittiert werden, deren Wellenlängenbereich im UV-Bereich beginnt und im IR-Bereich endet. Besonders bevorzugt ist Strahlung aus dem Wellenlängenbereich des sichtbaren Lichts bis in den NIR-Bereich also von 250 nm bis 2500 nm. Es kann aber auch die Bestrahlung eines engen Wellenlängenbereiches, bevorzugt im UV-Bereich, zur Anregung von Fluoreszenzstrahlung gewählt werden. Es sollten in einem genutzten Wellenlängenbereich für die Bestrahlung möglichst alle Wellenlängen innerhalb des jeweiligen Intervalls genutzt werden können. Die Grenzen sollten allein durch den Empfindlichkeitsbereich der eingesetzten Detektoren bezüglich ihrer Empfindlichkeit/Messgenauigkeit der mit Ihnen erfassbaren Intensitäten für die jeweiligen Wellenlängen und den optischen Eigenschaften der Strahlführungskomponenten vorgegeben sein. Bevorzugt sollten die Spektralbereiche verwendet werden, die die größte Varianz zwischen den Spektren der jeweiligen Bauteiloberflächen aufweisen und einen möglichst kleinen Bestimmungsfehler aufweisen.

Es kann im Strahlengang auch mindestens ein Element, mit dem eine gezielte Wahl der Polarisation der elektromagnetischen Strahlung erreichbar ist, vorhanden oder darin integriert sein.

Die eingesetzten Detektoren und die elektronische Auswerteeinheit sowie ggf. auch die Strahlungsquelle können ein so genanntes Hyperspektral-Image-System darstellen, das bei der erfindungsgemäßen Anordnung genutzt werden kann. Dadurch können neben den spektralen auch Ortsinformationen für den jeweils detektierten Teilbereich der Probe erhalten werden.

Zur Erhöhung des Kontrastes und/oder der maximal erreichbaren Differenzen von gemessenen Intensitäten, insbesondere zwischen Oberflächenbereichen, die zumindest nahezu defektfrei sind, und solchen in denen Defekte vorhanden sind, kann auf das Vorgehen nach DIN EN 4179 zurück gegriffen werden. Dabei kann die jeweilige Bauteiloberfläche nach einer Beschichtung mit einer Suspension, in der bei Bestrahlung mit elektromagnetischer Strahlung mit mindestens einer vorgebbaren Wellenlänge fluoreszierende Bestandteile enthalten sind, und einer nachfolgenden Reinigung der Oberfläche eine Bestrahlung mit elektromagnetischer Strahlung, mit der Fluoreszenz anregbar ist, eine visuelle Auswertung bevorzugt an einer Abbildung der Intensitätsmesswerte der erfassten Ortspunkte durchgeführt werden. Dabei kann die Bestrahlung monochromatisch mit der fluoreszenzanregenden Wellenlänge oder eine breitbandige Bestrahlung, bei der die jeweilige fluoreszenzanregende Wellenlänge Bestandteil des Wellenlängenspektrums der eingesetzten elektromagnetischen Strahlung ist, erfolgen.

Vorteilhaft kann eine Reduzierung der Daten, die bei der Detektion an den einzelnen Ortspunkten ermittelten Intensitäten für die einzelnen Wellenlängen eines erfassten Wellenlängenbereichs (Spektrum) ermittelt wurden, bei der eigentlichen Auswertung sein. Dadurch kann eine für die Bestimmung der Oberflächenbeschaffenheit relevante Information von der nicht relevanten abgetrennt werden, wodurch sich auch der elektronische Rechenaufwand erheblich reduziert und dadurch die erforderliche Zeit ebenfalls reduziert werden. Der Einsatz hochkomplexer, kostenintensiver elektronischer Rechentechnik ist nicht erforderlich.

Bei der Erfindung kann ein statistisches Modell erstellt werden, auf dessen Grundlage die Oberflächenbeschaffenheit des untersuchten Bauteils im entsprechend zugrundeliegenden Teilbereich vorhergesagt werden kann. Dazu kann der Datensatz, der mit einem aus mehreren bevorzugt in Reihe angeordneten optischen Detektoren, mit denen eine wellenlängen- und ortsaufgelöste Erfassung von Intensitäten möglich ist, erfasst werden.

Der Wert der Oberflächenbeschaffenheit wird durch Abweichungen vom Idealzustand des untersuchten Bauteils beeinflusst. Diese Abweichungen können Risse, Fehlstellen, Partikel, Schichtdickenschwankungen, Materialänderungen etc. sein. Ebenso bewirken diese Artefakte, dass Licht, das mit der Oberfläche des Bauteils wechselwirkt, unterschiedlich (spektral, Intensität) reflektiert, gestreut bzw. transmittiert wird. Die Gesamtheit einer hinreichenden Anzahl einzelner wellenlängenaufgelöst erfassten Intensitäten (Spektren) von unterschiedlichen Ortspunkten einer detektierten Teilfläche einer Bauteiloberfläche kann somit die Information über die Oberflächenbeschaffenheit im betrachteten Oberflächenbereich repräsentieren.

Für die Bestimmung der Oberflächenbeschaffenheit kann anhand eines gemessenen Merkmalssatzes unter Verwendung eines vorher mit an Proben der gleichen Probenklasse mit vergleichbarem Aufbau gemessenen Merkmalssätzen mit bekannten Oberflächenbeschaffenheiten aufgestellten Regressionsmodells die jeweilige Oberflächenbeschaffenheit des untersuchten Bauteils bestimmt werden.

Die gemessenen Merkmalssätze sind dazu einer Datenreduktion und somit einer Merkmalsextraktion zu unterziehen. So können die an den einzelnen Ortspunkten der jeweiligen Teilfläche detektierten Wellenlängenspektren einer spektralen Merkmalsextraktion, beispielsweise einer Clusteranalyse oder Hauptkomponentenanalyse unterzogen werden. Die im Regressionsmodell verwendeten Parameter können demzufolge die Anzahl und Verteilung der Cluster, die Scorewerte der Hauptkomponenten oder deren Verteilung sein.

Weiterhin können zur Merkmalsextaktion Methoden der Bildkompression für eine Texturbewertung herangezogen werden, bei der die an allen Ortspunkten der jeweiligen Teilfläche detektierten Intensitäten einzelner Wellenlängen oder die der Summe bzw. der gemittelten Summe der Intensitäten mehrerer Wellenlängen oder die durch eine spektrale Merkmalsreduktion bestimmten Parameter und/oder deren Kombinationen einer Bildkompression unterzogen werden. Zur Beschreibung der Texturinformation des Datensatzes sollte dabei mindestens ein Parameter über eine Wavelet-Transformation oder eine anderweitige Bildkompressionsmethode, wie beispielsweise Taylor Polynome, Fourier- und Kosinus-Transformationen, Diskrete Kosinus Transformation oder Grauwert-Matrix-Methode ermittelt werden.

Auf Grundlage eines Kalibriermodells (Regressionsmodell), das anhand gemessener Datensätze von Proben der gleichen Probenklasse mit vergleichbarem Aufbau und bekannter Oberflächenbeschaffenheit erstellt wurde, kann die Oberflächenbeschaffenheit von Teilflächen vorhergesagt werden, wobei die jeweils gemessenen Datensätze zur Kalibrierung und zu Vorhersage unter Verwendung identischer Schritte der Merkmalsreduktion behandelt werden. Beispielhaft kann dabei als Regressionsmodell eine "Multiple Lineare Regressionsanalyse" (MLRA), eine "Hauptkomponenten-Regression" (PCR), eine "Partielle kleinste Quadrat Regression" (PLS) oder ein "Neuronales Netz" eingesetzt werden.

Voraussetzungen für eine ausreichende Bestimmungsgenauigkeit sind eine homogene Beleuchtung der zur Detektion genutzten Fläche, so dass eine Überlagerung der durch die Probe bedingten Intensitätsschwankungen mit lateralen Schwankungen der Beleuchtungsintensität durch Realisierungen eines lateral homogenen Lichtfelds vermieden werden kann. Für kleine Probenbereiche kann vorteilhaft eine Mikroskop-Optik eingesetzt werden. Die erfindungsgemäße Anordnung kann durch Einsatz unterschiedlicher Optiken, Arbeitsabstände und Vergrößerungen an die jeweilige zu detektierende Fläche der untersuchten Bauteiloberfläche angepasst werden.

Mit der Erfindung kann eine Bestimmung von Oberflächenbeschaffenheit von Bauteilen innerhalb weniger Millisekunden bis Minuten durchgeführt werden. Es ist eine berührungslose, zerstörungsfreie Messung möglich. Die Bauteile müssen in vielen Fällen nicht zusätzlich behandelt oder anderweitig vorbereitet werden. Bevorzugt ist ein Einsatz in der Qualitätskontrolle und bei inline-Überwachungen der Produktion, so dass in diesen Fällen keine Probenentnahme und gesonderte Bestimmung erforderlich sind.

Nachfolgend soll die Erfindung beispielhaft näher erläutert werden.

Beispiel 1

Für die Untersuchungen wurde ein 0,5 cm dickes Blech einer Ti-Legierung mit einer Größe von 8 cm x 5 cm verwendet. Ziel der Untersuchung ist eine automatisierte Riss- bzw. Defekterkennung. In diese Probe wurden mittels eines Lasers, Gravuren unterschiedlicher Breite und Tiefe eingebracht, die einen Defekt des Ti-Bauteils simulieren. Anschließend wurde die Probe mit einem Fluoreszenz-Öl behandelt. Nach dem Aufbringen wurde das Öl durch intensives Waschen mit Wasser entfernt. Reste des Öls bleiben in den Rissstrukturen der Probe zurück. Die so präparierte Probe wurde diffus mit einer Fluoreszenzlichtquelle (365 nm Emissionsmaxiumum) bestrahlt. Oberhalb der Probe waren insgesamt 1000 x 190 optische Detektoren in einer Reihen-Spaltenanordnung angeordnet, so dass die gesamte Probenfläche wellenlängen- und ortsaufgelöst erfasst werden konnte. Mit den optischen Detektoren wurde für einzelne Ortspunkte eine wellenlängenaufgelöste Erfassung der Intensitäten der von der Probe reflektierten Strahlung realisiert. Es wurden insgesamt 190 Wellenlängen im Bereich 400 nm bis 1000 nm berücksichtigt. Die Probe wurde dabei senkrecht zur Reihenanordnung der Detektoren bewegt, um die gesamte Probenfläche zu erfassen. Das dabei erfasste, spektrale Bild der Probe kann auch als Hypercube bezeichnet werden.

Anschließend erfolgte die Bearbeitung und Auswertung des so erhaltenen Hypercubes der untersuchten Probe.

Die Verarbeitung der Spektren wurde mit folgenden Schritten durchgeführt:

- Mittelwertglättung (11 Punkte)
- Ermittlung der Basislinienintensität an einer Wellenlänge an der keine Fluoreszenz messbar ist (675 nm)
- Subtraktion der Basislinienintensität
- Ermittlung der Intensität an der Emissionswellenlänge des Fluoreszenz-Öls (510 nm)

Die Fluoreszenz-Intensität ist proportional zur Menge des Fluoreszenz-Öls auf der Oberfläche der Probe. In den Defektbereichen der Probenoberfläche kommt es zu einer Anreicherung des Fluoreszenz-Öls, wodurch in diesen Bereichen eine größere Menge des Öls und damit eine erhöhte Emission messbar sind. Anhand der Fluoreszenz-Intensität können Defektbereiche automatisch erkannt werden. Für diese Erkennung und weitere Klassifizierungen können charakteristische Merkmale der Defektbereiche ermittelt werden. Beispielsweise können Form und Größe der Defektbereiche sowie ihre Fluoreszenzintensität und -verteilung eingesetzt werden. Die so ermittelten Merkmale ermöglichen eine Klassifizierung der Defekte in, zuvor an anderen (Referenz-) Proben ermittelten, Defektklassen. Für die Klassifizierung können beispielsweise die Diskriminanzanalyse, Stützvektor-Methoden oder Neuronale Netzwerke eingesetzt werden.

Beispiel 2

Für die Untersuchungen wurden Metallfolien mithilfe einer Schlitzdüse mit unterschiedlichen Mengen einer Precursor-Lösung beschichtet. Durch anschließendes Tempern der Substrate wurde mit der Precursor-Lösung auf den Metallfolien eine dünne Schicht ausgebildet. Diese Schicht kann verschiedene Defekte, beispielsweise verursacht durch Verunreinigungen der Metallfolie oder des Precursors oder durch Probleme beim Beschichtungsprozess, fehlerhafte Bereiche (Defekte) aufweisen, die für eine weitere Verarbeitung problematisch sind. Die Herstellung der beschichteten Metallfolie kann kontinuierlich im Rolle-zu-Rolle-Verfahren erfolgen. Ziel der Untersuchung ist eine automatische Erkennung von Defektbereichen auf den kontinuierlich produzierten Proben.

Zu diesem Zweck wurden die beschichteten Metallfolien diffus mit Halogenlampen bestrahlt. Oberhalb der jeweiligen Probe waren insgesamt 1000 x 190 optische Detektoren in einer Reihen-Spaltenanordnung angeordnet, so dass die gesamte Probenfläche wellenlängen- und ortsaufgelöst erfasst werden konnte. Mit den optischen Detektoren wurde für einzelne Ortspunkte eine wellenlängenaufgelöste Erfassung der Intensitäten der von der Probe reflektierten Strahlung realisiert. Es wurden insgesamt 190 Wellenlängen im Bereich 400 nm bis 1000 nm berücksichtigt. Die Probe wurde dabei senkrecht zur Reihenanordnung der Detektoren bewegt, um die gesamte Probenfläche zu erfassen. Das dabei erfasste, spektrale Bild der Probe kann auch als Hypercube bezeichnet werden.

Die Untersuchungen wurden zuerst für Proben durchgeführt, die unter normalen Herstellungsbedingungen produziert wurden und deren Qualität für eine weitere Verarbeitung als ausreichend angesehen wurde. Die spektralen Bilder der so untersuchten Proben wurden anschließend folgenden Verarbeitungsschritten unterzogen:

- Mittelwertglättung (11 Punkte)
- Umwandlung der Reflexions- in Absorptionsspektren
- Erstellung eines Hauptkomponentenmodells aus allen ausgewählten Hypercubes
- Berechnung der Residuen (R) und des T²-Wertes für jedes Spektrum der Hypercubes

  ○ Residuen: nicht durch das Hauptkomponentenmodell erklärte Variabilität des jeweiligen Spektrums
  ○ T²-Wert für jedes Spektrum:
  ○

$$T^2 = \sum_{p=1}^{P} \left(\frac{S_p^2}{\sigma_{sp}^2}\right)$$

mit

P    Anzahl der verwendeten Hauptkomponenten

$S_p$    Scorewert der jeweiligen Hauptkomponente

$\sigma_{sp}$    Eigenwert der entsprechenden Hauptkomponente

- Berechnung eines Schwellenwertes für R und T². Spektren mit Werten über dieser Schwelle werden als Defekte gewertet

Anschließend können neue, unbekannte Proben durch dasselbe Messsystem untersucht werden. Die erhaltenen Hypercubes werden mit dem vorher ermittelten Hauptkomponentenmodell analysiert. Vom Modell abweichende Bereiche (Defekte) können durch R- und T²-Werte über dem vorher festgelegten Schwellenwert erkannt werden. Die Gesamtzahl der Defekte kann als Maß für die Qualität der produzierten Schicht verwendet werden. Ist die Defektanzahl zu groß, kann der entsprechende Probenbereich aussortiert bzw. der Beschichtungsprozess angepasst werden.

**Patentansprüche**

1. Anordnung zur Bestimmung der Oberflächenbeschaffenheit von Bauteiloberflächen, insbesondere von Defekten, bei der

   mehrere Detektoren, die zur ortsaufgelösten spektralen Analyse elektromagnetischer Strahlung innerhalb eines Wellenlängenintervalls ausgebildet sind, in einer Reihen oder einer Reihen- und Spaltenanordnung angeordnet und

   die Detektoren mit einer elektronischen Auswerteeinheit verbunden und so angeordnet sind, dass von einer breitbandigen Strahlungsquelle emittierte elektromagnetische Strahlung entweder nach einer Reflexion an der Oberfläche eines Bauteils, einer auf der Oberfläche eines Bauteils ausgebildeten Schicht und/oder nach dem Durchstrahlen eines für die elektromagnetische Strahlung transparenten Bauteils auf die Detektoren auftrifft, wobei die Bestrahlung so erfolgt, dass auf einer Fläche, von der die elektromagnetische Strahlung reflektiert oder durch die Fläche transmittiert wird, eine lateral und zeitlich homogene Intensität der elektromagnetischen Strahlung eingehalten ist, und die elektronische Auswerteeinheit so ausgebildet ist, dass die orts- und wellenlängenaufgelöst erfassten Messsignale der Detektoren innerhalb eines Wellenlängenintervalls für einzelne Ortspunkte, die auf einer vorgebbaren Fläche des Bauteils angeordnet sind, erfassbar sind; wobei mit der Gesamtheit aller an Ortspunkten der jeweiligen bestrahlten Fläche wellenlängenaufgelöst erfassten Intensitäten eine dreidimensionale Datenstruktur, bestehend aus einer wellenlängenaufgelösten und zwei ortsaufgelösten Dimensionen gebildet ist und mit den für einzelne Ortspunkte erfassten Messsignalen eine mehrdimensionale Abbildung der jeweiligen bestrahlten Fläche erstellbar ist.

2. Anordnung nach Anspruch 1, **dadurch gekennzeichnet, dass** an mehreren Positionen erfasste Messsignale jeweils einem Teilbereich der detektierten Fläche zuordenbar sind, und

   für alle wellenlängenaufgelöst erfassten Messsignale der Teilbereiche der detektierten Fläche eine Datenreduzierung durchführbar ist, bei der aussagekräftige Merkmale selektiert werden und anhand dieser selektierten Merkmale mit in einem elektronischen Speicher abgelegten vorab ermittelten Regressionsmodells, das anhand der in analoger Weise erhaltenen Merkmalssätzen von Bauteilen, deren Oberflächenbeschaffenheiten ermittelt worden sind, eine Aussage über eine dementsprechende Oberflächenbeschaffenheit erreichbar ist.

3. Anordnung nach einem der vorhergehenden Ansprüche, **dadurch gekennzeichnet, dass** die elektronische Auswerteeinheit so ausgebildet ist, dass eine Datenreduzierung durch Merkmalsextraktion mittels Hauptkomponentenanalyse, Extraktion von Texturinformationen, Mittelwertbildung, Bestimmung der Standardabweichung und/oder Kombinationen davon erreichbar ist.

4. Anordnung nach einem der vorhergehenden Ansprüche, **dadurch gekennzeichnet, dass** die Bestrahlung der Fläche mit mindestens einem Winkel im Bereich 0° bis < 90° in Bezug zur Normalen der jeweiligen Bauteiloberfläche erfolgt.

5. Anordnung nach einem der vorhergehenden Ansprüche, **dadurch gekennzeichnet, dass** die Detektion und Auswertung unter Verwendung mindestens eines Polarisators mit mindestens einer definierten bekannten Polarisationsebene in Bezug zur Einfallsebene oder deren Kombinationen durchführbar ist.

6. Anordnung nach einem der vorhergehenden Ansprüche, **dadurch gekennzeichnet, dass** mit der elektronischen Auswerteeinheit bei der Datenreduzierung und Merkmalsextraktion zunächst eine Auswertung der spektralen Informationen und anschließend der Ortsinformationen erfolgt.

7. Anordnung nach einem der vorhergehenden Ansprüche, **dadurch gekennzeichnet, dass** die Detektoren und das Bauteil entlang mindestens einer Achse relativ und dabei bevorzugt in einem konstanten Abstand zueinander bewegbar sind.

8. Anordnung nach einem der vorhergehenden Ansprüche, **dadurch gekennzeichnet, dass** die Strahlungsquelle die elektromagnetische Strahlung formende optische Elemente aufweist oder eine elektromagnetische Strahlung diffus auf die Fläche emittierende Strahlungsquelle, die insbesondere innerhalb eines Hohlkörpers angeordnet ist und besonders bevorzugt im Strahlengang der elektromagnetischen Strahlung eine, den Einfall von gestreuter elektromagnetischer Strahlung vermeidende Blende vor den Detektoren angeordnet ist.

9. Anordnung nach einem der vorhergehenden Ansprüche, **dadurch gekennzeichnet, dass** die jeweilige Bauteiloberfläche nach einer Beschichtung mit einer Suspension, in der bei Bestrahlung mit elektromagnetischer Strahlung mit mindestens einer vorgebbaren Wellenlänge fluoreszierende Bestandteile enthalten sind, und einer nachfolgenden Reinigung der Oberfläche eine Bestrahlung mit elektromagnetischer Strahlung, mit der Fluoreszenz anregbar ist, eine visuelle Auswertung durchführbar ist.

10. Anordnung nach einem der vorhergehenden Ansprüche, **dadurch gekennzeichnet, dass** in einer Reihe mindestens dreißig und in einer Spalte mindestens 50 Detektoren angeordnet sind.

11. Anordnung nach einem der vorhergehenden Ansprüche, **dadurch gekennzeichnet, dass** die Reihen- und Spaltenanordnung von Detektoren mit optischen Elementen und Auswerteelektronik mit einer Hyperspektral-Kamera gebildet ist.

**Claims**

1. A system for determining the surface quality of component surfaces, in particular defects, wherein

   a plurality of detectors, which are designed for the spatially resolved spectral analysis of electromagnetic radiation within a wavelength interval, are arranged in a row or in a row and column arrangement, and the detectors are connected to an electronic evaluation unit and arranged so that electromagnetic radiation emitted by a broadband radiation source impinges on the detectors either after reflection on the surface of a component, a layer formed on the surface of a component, and/or after penetration of a component that allows the electromagnetic radiation to pass, the irradiation taking place in such a way that a laterally and temporally homogeneous intensity of the electromagnetic radiation is maintained on a surface by which the electromagnetic radiation is reflected or through the surface of which the same is transmitted, and

the electronic evaluation unit being designed so that the measurement signals of the detectors detected in a spatially and wavelength resolved manner within a wavelength interval are detectable for individual location points that are situated on a predefinable surface of the component;

a three-dimensional data structure, composed one wavelength-resolved dimension and two spatially resolved dimensions, being formed from the entirety of all intensities detected in a wavelength-resolved manner at location points of the particular irradiated surface, and

a multidimensional image of the particular irradiated surface being creatable from the measurement signals detected for the individual location points.

2. The system according to claim 1, **characterized in that** measurement signals detected at a plurality of positions can each be assigned to a sub-region of the detected surface, and

a data reduction can be carried out for all measurement signals of the sub-regions of the detected surface which are detected in a wavelength-resolved manner, during which meaningful features are selected and

based on these selected features, information about a corresponding surface quality can be attained using a regression model which is stored in an electronic memory and ascertained in advance and which, based on the feature sets obtained in analogous fashion whose surface qualities have been ascertained.

3. The system according to any one of the preceding claims, **characterized in that** the electronic evaluation unit is designed so that a data reduction can be achieved by way of feature extraction using principal component analysis, extraction of texture information, averaging, determination of the standard deviation and/or combinations thereof.

4. The system according to any one of the preceding claims, **characterized in that** the irradiation of the surface takes place at an angle at least in the range of 0° to < 90° with respect to the normal of the particular component surface.

5. The system according to any one of the preceding claims, **characterized in that** the detection and evaluation can be carried out using at least one polarizer having at least one defined known polarization plane with respect to the plane of incidence or the combinations thereof.

6. The system according to any one of the preceding claims, **characterized in that**, during the data reduction and feature extraction, the electronic evaluation unit initially evaluates the spectral information and thereafter evaluates the location information.

7. The system according to any one of the preceding claims, **characterized in that** the detectors and the component can be moved along at least one axis relative and preferably at a constant distance with respect to one another.

8. The system according to any one of the preceding claims, **characterized in that** the radiation source comprises the optical elements that shape the electromagnetic radiation or a radiation source that emits electromagnetic radiation diffusely onto the surface, which is in particular arranged within a hollow body, and particularly preferably that a diaphragm avoiding the incidence of scattered electromagnetic radiation is arranged in the optical path of the electromagnetic radiation upstream from the detectors.

9. The system according to any one of the preceding claims, **characterized in that** a visual evaluation of the respective component surface can be carried out after having been coated with a suspension which contains constituent parts that fluoresce when irradiated with electromagnetic radiation having at least a predefinable wavelength and after having subsequently been cleaned, an irradiation with electromagnetic radiation by way of which fluorescence can be excited.

10. The system according to any one of the preceding claims, **characterized in that** at least 30 detectors are arranged in a row and at least 50 detectors are arranged in a column.

11. The system according to any one of the preceding claims, **characterized in that** the arrangement of detectors in rows and columns including optical elements and evaluation electronics is formed with a hyper-spectral camera.

## Revendications

1. Dispositif pour déterminer la qualité de la surface de composants, en particulier de défauts, dans lequel

   plusieurs détecteurs, qui sont conçus pour l'analyse spectrale à résolution spatiale d'un rayonnement électromagnétique dans un intervalle de longueurs d'onde, sont agencés en une rangée ou en une rangée et une colonne et les détecteurs sont reliés à une unité d'évaluation électronique et agencés de telle sorte que le rayonnement électromagnétique émis par une source de rayonnement à large bande frappe les détecteurs soit après réflexion sur la surface d'un composant, sur une couche formée à la surface d'un composant et/soit après traversée d'un composant transparent au rayonnement électromagnétique, dans lequel

   l'irradiation s'effectue de telle sorte qu'une intensité latéralement et temporellement homogène du rayonnement électromagnétique est maintenue sur une face à partir de laquelle le rayonnement électromagnétique est réfléchi ou transmis à travers la face, et

   l'unité d'évaluation électronique est conçue de telle sorte que les signaux de mesure enregistrés par les détecteurs, avec une résolution en position et en longueur d'onde, peuvent être détectés dans un intervalle de longueur d'onde pour des points individuels situés sur une surface prédéfinie du composant ; dans laquelle

   une structure de données tridimensionnelle étant formée avec l'ensemble de toutes les intensités enregistrées en fonction de la longueur d'onde en différents points de la surface irradiée, laquelle est composée d'une dimension résolue en longueur d'onde et de deux dimensions résolues en position

   et

   les signaux de mesure enregistrés pour différents points locaux permettant de créer une représentation multidimensionnelle de la surface irradiée correspondante.

2. Dispositif selon la revendication 1, **caractérisé en ce que** les signaux de mesure enregistrés en plusieurs positions peuvent être attribués à une zone partielle de la surface détectée, et

   une réduction des données peut être effectuée pour tous les signaux de mesure résolus en longueur d'onde des zones partielles de la surface détectée, des caractéristiques significatives étant alors sélectionnées, et

   une indication sur une texture de surface correspondante peut être obtenue à l'aide de ces caractéristiques sélectionnées et d'un modèle de régression prédéfini enregistré dans une mémoire électronique, lequel est créé à partir des ensembles de caractéristiques obtenus de manière analogue pour des composants dont les textures de surface ont été déterminées.

3. Dispositif selon l'une des revendications précédentes, **caractérisé en ce que** l'unité d'évaluation électronique est conçue de telle sorte qu'une réduction des données peut être obtenue par extraction de caractéristiques au moyen d'une analyse en composantes principales, extraction d'informations sur la texture, calcul de la moyenne, détermination de l'écart type et/ou combinaisons de ces méthodes.

4. Dispositif selon l'une des revendications précédentes, **caractérisé en ce que** l'irradiation de la surface s'effectue avec au moins un angle compris entre 0° et < 90° par rapport à la normale de la surface respective de l'élément de construction.

5. Dispositif selon l'une des revendications précédentes, **caractérisé en ce que** la détection et l'évaluation peuvent être effectuées à l'aide d'au moins un polariseur avec au moins un plan de polarisation défini connu par rapport au plan d'incidence ou à des combinaisons de ceux-ci.

6. Dispositif selon l'une des revendications précédentes, **caractérisé en ce que**, lors de la réduction des données et de l'extraction des caractéristiques, l'unité d'évaluation électronique procède d'abord à une évaluation des informations spectrales, puis à une évaluation des informations de localisation.

7. Dispositif selon l'une quelconque des revendications précédentes, **caractérisé en ce que** les détecteurs et le composant sont mobiles l'un par rapport à l'autre le long d'au moins un axe de manière relative et, ce faisant, de préférence à une distance constante l'un de l'autre.

8. Dispositif selon l'une quelconque des revendications précédentes, **caractérisé en ce que** la source de rayonnement présente des éléments optiques formant le rayonnement électromagnétique ou une source de rayonnement émettant un rayonnement électromagnétique de manière diffuse sur la face, qui est disposée en particulier à l'intérieur d'un corps creux et de manière particulièrement préférée un diaphragme évitant l'incidence d'un rayonnement électromagnétique dispersé est disposé devant les détecteurs dans la trajectoire du rayonnement électromagnétique.

9. Dispositif selon l'une des revendications précédentes, **caractérisé en ce que** la surface respective des composants, après avoir été recouverte d'une suspension contenant des composants fluorescents qui émettent une fluorescence lorsqu'ils sont exposés à un rayonnement électromagnétique d'au moins une longueur d'onde prédéfinie, puis nettoyée, est exposée à un rayonnement électromagnétique capable de provoquer une fluorescence, ce qui permet d'effectuer une évaluation visuelle.

10. Dispositif selon l'une des revendications précédentes, **caractérisé en ce qu'**au moins trente détecteurs sont disposés en une rangée et au moins 50 détecteurs sont disposés en une colonne.

11. Dispositif selon l'une des revendications précédentes, **caractérisé en ce que** la disposition en rangées et en colonnes des détecteurs à éléments optiques et électronique d'évaluation est formée par une caméra hyperspectrale.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2008180618 A
- WO 2015133287 A1
- WO 2013035726 A1